# EUROPEAN PATENT SPECIFICATION

(11) **EP 4 207 469 B1**
(45) Date of publication and mention of the grant of the patent: **18.02.2026**
(21) Application number: 21872988.7
(22) Date of filing: 27.09.2021
(51) Int. Cl.: H01M 50/403, H01M 50/449, H01M 50/44, H01M 50/446, H01M 10/052, H01M 50/411, H01M 50/429, H01M 50/414, H01M 50/417, H01M 50/451, H01M 50/489

(54) **SEPARATOR FOR LITHIUM SECONDARY BATTERY AND METHOD FOR MANUFACTURING THE SAME**
SEPARATOR FÜR LITHIUMSEKUNDÄRBATTERIE UND VERFAHREN ZU DESSEN HERSTELLUNG
SÉPARATEUR POUR BATTERIE SECONDAIRE AU LITHIUM ET SON PROCÉDÉ DE FABRICATION

(30) Priority: 25.09.2020 KR 20200125066
(43) Date of publication of application: 05.07.2023
(73) Proprietor: LG Chem, Ltd., Seoul 07336 (KR)
(72) Inventor: KIM, Kong-Kyeom, Daejeon 34122 (KR); KWON, Hyok-Joon, Daejeon 34122 (KR); LEE, A-Young, Daejeon 34122 (KR); LEE, Joo-Sung, Daejeon 34122 (KR); RYU, Sang-Uk, Daejeon 34122 (KR); PARK, Min-Choon, Daejeon 34122 (KR)
(74) Representative: Hoffmann Eitle
(86) International application number: PCT/KR2021/013157
(87) International publication number: WO 2022/065960

(56) References cited:
- CN-A- 107 611 326
- CN-A- 108 417 762
- CN-A- 109 273 649
- JP-A- 2002 151 035
- JP-A- 2003 297 680
- KR-A- 20070 077 231
- KR-A- 20080 066 309
- KR-A- 20150 037 394

## Description

### TECHNICAL FIELD

The present disclosure relates to a separator applicable to an electrochemical device, such as a lithium secondary battery, and a method for manufacturing the same.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Although electrochemical devices, such as lithium secondary batteries, have been produced from many production companies, safety characteristics thereof show different signs. Evaluation and securement of safety of such electrochemical devices are very important. For example, a separator prevents a short-circuit between a positive electrode and a negative electrode and provides a channel for transporting lithium ions. Therefore, a separator is an important factor affecting the safety and output characteristics of a battery.

Since a separator for a lithium secondary battery includes stretched polyolefin as a main ingredient, it has hydrophobic property. Therefore, as the thickness of a porous polymer substrate is increased, it is not easy to wet the porous polymer substrate with an electrolyte.

### DISCLOSURE

### Technical Problem

The present disclosure is designed to solve the problems of the related art, and therefore the present disclosure is directed to providing a separator including a hydrophobic porous polymer substrate modified to show hydrophilic property.

The present disclosure is also directed to improving the performance of a battery using such a separator.

### Technical Solution

In one aspect of the present disclosure, there is provided a separator for a lithium secondary battery according to any one of the following embodiments.

According to the first embodiment, there is provided a separator for a lithium secondary battery, including: a porous polymer substrate; and a hydrophilic modification layer disposed inside of the porous polymer substrate, or disposed inside of the porous polymer substrate and on at least one surface of the porous polymer substrate, and including a polymer compound represented by the following Chemical Formula 1 and a surfactant, wherein the surfactant is a fluorine-based surfactant, wherein the content of the surfactant is 1.0 parts by weight or less based on 100 parts by weight of the polymer compound, wherein the content of the polymer compound is 1 part by weight or less based on 100 parts by weight of the porous polymer substrate: 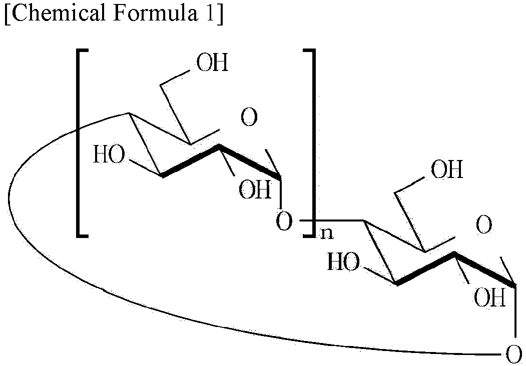 wherein n is an integer of 6-8.

According to the second embodiment, there is provided the separator for a lithium secondary battery as defined in the first embodiment, wherein the polymer compound includes α-cyclodextrin, β-cyclodextrin, γ-cyclodextrin, or two or more of them.

According to the fifth embodiment, there is provided the separator for a lithium secondary battery as defined in any one of the first to the fourth embodiments, wherein the surfactant has an electrolyte permeability of 30% or more even after high-temperature storage, and the electrolyte permeability is determined by analyzing a product, obtained by adding 0.5 parts by weight of the surfactant to 100 parts by weight of an electrolyte containing 1 M LiPF₆ in ethylene carbonate and ethyl methyl carbonate (3:7 volume ratio) to prepare a composition, and sealing the resultant composition and storing it in an oven at 70°C for 6 hours, with a UV-Vis spectrophotometer at room temperature (25°C).

According to the sixth embodiment, there is provided the separator for a lithium secondary battery as defined in any one of the first to the fifth embodiments, wherein the content of the surfactant is 0.5 parts by weight or less based on 100 parts by weight of the porous polymer substrate.

According to the seventh embodiment, there is provided the separator for a lithium secondary battery as defined in any one of the first to the sixth embodiments, which further includes a porous coating layer, containing inorganic particles and a binder polymer for fixing and interconnecting the inorganic particles, on at least one surface of the separator .

According to the eighth embodiment, there is provided the separator for a lithium secondary battery as defined in the seventh embodiment, wherein the porous coating layer further includes a polymer compound represented by the following Chemical Formula 1: 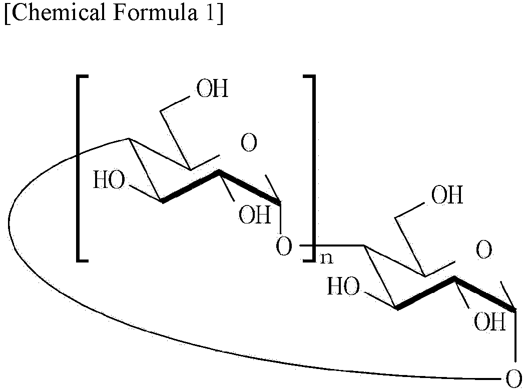 wherein n is an integer of 6-8.

According to the ninth embodiment, there is provided the separator for a lithium secondary battery as defined in the eighth embodiment, wherein the content of the polymer compound represented by Chemical Formula 1 is 10 parts by weight or less based on 100 parts by weight of the inorganic particles.

According to the tenth embodiment, there is provided the separator for a lithium secondary battery as defined in any one of the seventh to the ninth embodiments, wherein the binder polymer is a particle-type binder polymer or a non-particle type binder polymer.

According to the eleventh embodiment, there is provided the separator for a lithium secondary battery as defined in any one of the seventh to the tenth embodiments, wherein the inorganic particles include inorganic particles having a dielectric constant of 5 or more, inorganic particles having lithium-ion transportability, or a mixture of two or more of them.

According to the twelfth embodiment, there is provided the separator for a lithium secondary battery as defined in any one of the seventh to the eleventh embodiments, wherein the inorganic particles are hydrophilic.

According to the thirteenth embodiment, there is provided the separator for a lithium secondary battery as defined in any one of the seventh to the twelfth embodiments, wherein the inorganic particles have a silane group grafted to the surfaces of the inorganic particles .

In another aspect of the present disclosure, there is provided a lithium secondary battery according to the following embodiment.

According to the fourteenth embodiment, there is provided a lithium secondary battery including a positive electrode, a negative electrode, a separator interposed between the negative electrode and the positive electrode, and an electrolyte, wherein the separator is the same as defined in any one of the first to the thirteenth embodiments.

In still another aspect of the present disclosure, there is provided a method for manufacturing a separator for a lithium secondary battery according to any one of the following embodiments.

According to the fifteenth embodiment, there is provided a method for manufacturing a separator for a lithium secondary battery, including the steps of:
(S1) preparing a substrate-modifying composition including a polymer compound represented by the following Chemical Formula 1 and a surfactant dispersed or dissolved in an aqueous solvent; and
(S2) applying the substrate-modifying composition onto at least one surface of a hydrophobic porous polymer substrate having a plurality of pores, followed by drying, wherein the surfactant is a fluorine-based surfactant, wherein the content of the surfactant is 1.0 parts by weight or less based on 100 parts by weight of the polymer compound, wherein the content of the polymer compound is 1 part by weight or less based on 100 parts by weight of the porous polymer substrate: 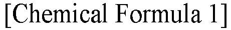 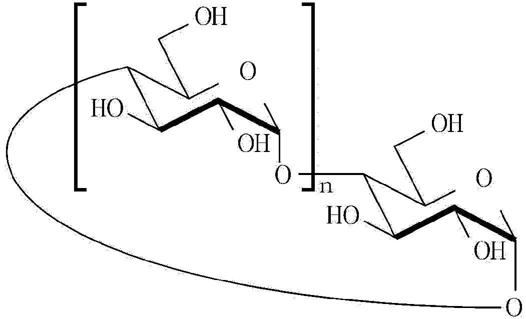 wherein n is an integer of 6-8.

According to the sixteenth embodiment, there is provided the method for manufacturing a separator for a lithium secondary battery as defined in the fifteenth embodiment, wherein step (S2) includes modifying the porous polymer substrate to show hydrophilic property by allowing the surfactant and the polymer compound to infiltrate into the porous polymer substrate.

According to the seventeenth embodiment, there is provided the method for manufacturing a separator for a lithium secondary battery as defined in the fifteenth or the sixteenth embodiment, which further includes step (S3) of applying a composition for forming a porous coating layer, containing a solvent, inorganic particles and a binder polymer, onto at least one surface of the porous polymer substrate coated with the substrate-modifying composition and dried, and then carrying out drying to form a porous coating layer, after step (S2).

According to the eighteenth embodiment, there is provided the method for manufacturing a separator for a lithium secondary battery as defined in the seventeenth embodiment, wherein the solvent is an aqueous solvent or an organic solvent.

According to the nineteenth embodiment, there is provided the method for manufacturing a separator for a lithium secondary battery as defined in the seventeenth or the eighteenth embodiment, wherein the composition for forming a porous coating layer further includes a polymer compound represented by the above Chemical Formula 1.

According to the twentieth embodiment, there is provided the method for manufacturing a separator for a lithium secondary battery as defined in any one of the seventeenth to the nineteenth embodiments, wherein step (S3) is carried out under a relative humidity of 30-80%.

### Advantageous Effects

According to an embodiment of the present disclosure, it is possible to increase the electrolyte wettability and lithium-ion transport rate in a separator by using a polymer compound having a specific structure and a surfactant.

Therefore, a battery using the separator may provide improved output characteristics and cycle characteristics.

The present disclosure also provides methods for manufacturing the separator and the battery.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 to FIG. 3 show the results of the electrolyte wettability test for determining the electrolyte wettability of each of the separators according to Example 1 and Comparative Examples 1 and 2.

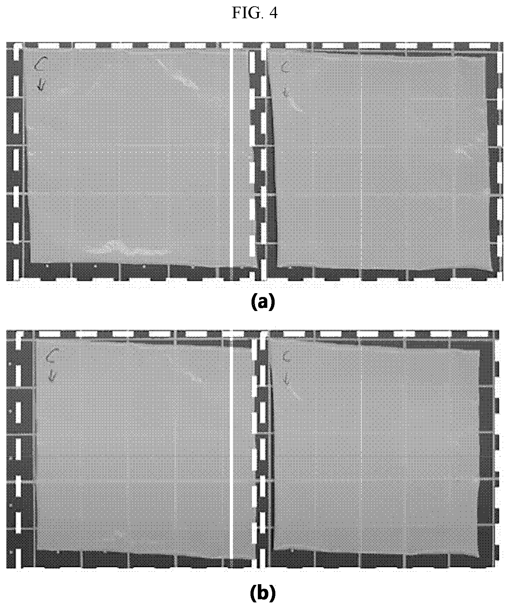

FIG. 4(a) and FIG. 4(b) are photographic views illustrating the separator according to Example 1 right after its heat shrinking.

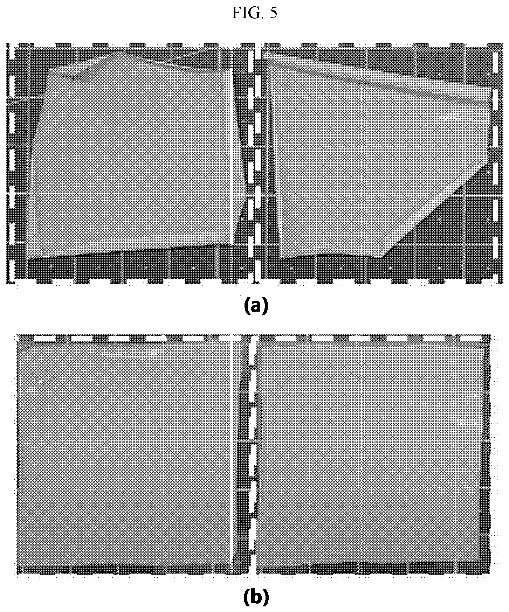

FIG. 5(a) and FIG. 5(b) are photographic views illustrating the separator according to Comparative Example 1 right after its heat shrinking.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not exclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

In one aspect of the present disclosure, there are provided a separator for a lithium secondary battery and a method for manufacturing the same.

A separator used in an electrochemical device prevents a short-circuit between a positive electrode and a negative electrode and provides a channel for transporting lithium ions. Therefore, a separator is an important factor affecting the safety and output characteristics of a battery.

Since a separator for a lithium secondary battery includes stretched polyolefin as a main ingredient, it has hydrophobic property. Therefore, as the thickness of a porous polymer substrate is increased, it is not easy to wet the porous polymer substrate with an electrolyte.

To facilitate wetting with an electrolyte, there has been an attempt to introduce inorganic particles onto a porous polymer substrate. However, in this case, electrolyte wetting still has not significantly improved. Even in the case of modification of the surface of a porous polymer substrate with corona surface treatment, there is a problem in that such surface modification is not maintained continuously. As another approach, a hydrophilic organic additive has been introduced onto a porous polymer substrate, but there is no successful example. Finally, there has been an attempt to modify the interfacial property of a porous polymer substrate from hydrophobic property into hydrophilic property by using a dispersant, but the effect is not sufficient.

The present disclosure is designed to solve the problems of the related art. In other words, the present disclosure is directed to providing a separator which allows an electrolyte to infiltrate well into the pores of the separator to improve the performance (output and capacity retention) of a battery significantly.

In one aspect of the present disclosure, there is provided a separator for a lithium secondary battery, including: a porous polymer substrate; and a hydrophilic modification layer disposed inside of the porous polymer substrate, or disposed inside of the porous polymer substrate and on at least one surface of the porous polymer substrate, and including a polymer compound represented by the following Chemical Formula 1 and a surfactant: 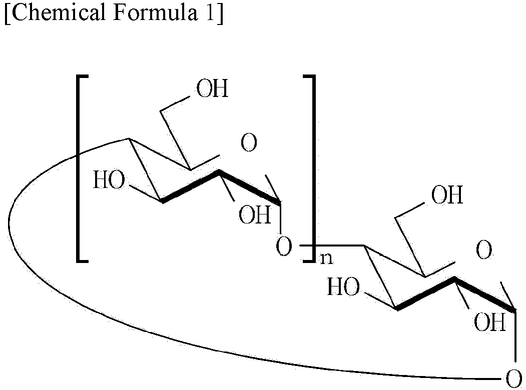 wherein n is an integer of 6-8.

The separator according to an embodiment of the present disclosure essentially includes a porous polymer substrate including a plurality of fibrils, a polymer compound represented by the above Chemical Formula 1 and a surfactant. Herein, the polymer compound has a unique structure, and facilitates infiltration of an electrolyte into the separator, when being used in combination with a surfactant. This is because the hydrophilic polymer compound can approach the surface of the fibrils in the hydrophobic porous polymer substrate by virtue of the surfactant. Therefore, the electrolyte can be encapsulated in the hollow portions of the polymer compound represented by Chemical Formula 1. As a result, the hydrophobic porous polymer substrate may be modified into hydrophilic one.

The separator according to an embodiment of the present disclosure includes a polymer compound represented by the following Chemical Formula 1 in the porous polymer substrate: 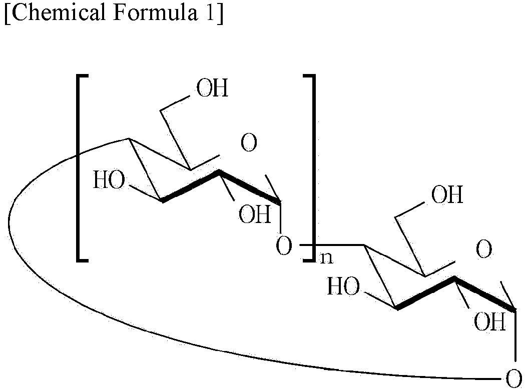 wherein n is an integer of 6-8.

The polymer compound may be cyclodextrin containing 6-8 glucose units arranged in a ring-like shape. Herein, the polymer compound is α-cyclodextrin when the number of glucose units is 6, β-cyclodextrin when the number of glucose units is 7, and γ-cyclodextrin when the number of glucose units is 8. Therefore, the polymer compound may include α-cyclodextrin, β-cyclodextrin, γ-cyclodextrin, or two or more of them.

According to an embodiment of the present disclosure, the content of the polymer compound is 1 part by weight or less, 0.8 parts by weight or less, 0.5 parts by weight or less, and 0.01 parts by weight or more, or 0.3 parts by weight or more, based on 100 parts by weight of the porous polymer substrate. Within the above-defined range, the amount of the polymer compound is adequate to increase the hydrophilicity of the porous polymer substrate. Therefore, it is possible to accomplish the effect of the present disclosure.

The separator according to an embodiment of the present disclosure includes a surfactant in the porous polymer substrate.

As described above, the surfactant is a supplementary ingredient which helps the polymer compound to approach the fibrils in the porous polymer substrate.

According to an embodiment of the present disclosure, the surfactant is a fluorine-based surfactant.

Particularly, a fluorine-based surfactant is used preferably. The fluorine-based surfactant is advantageous in that it shows higher coatability to the porous polymer substrate, as compared to a nonionic surfactant, and has higher oxidation potential so that the risk of side reactions in a battery is low.

According to an embodiment of the present disclosure, the fluorine-based surfactant may contain 5-25 fluorine atoms per molecule, and may be at least one selected from the compounds represented by the following structural formulae:

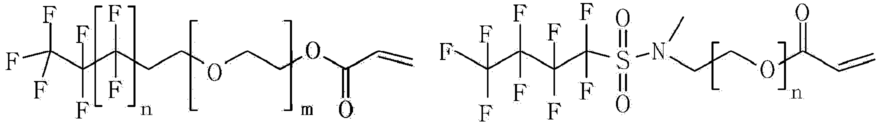

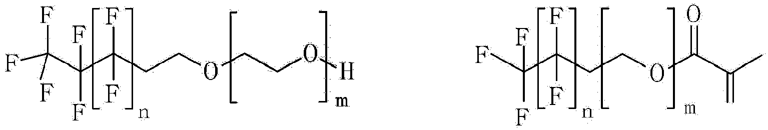

In the above structural formulae, each of n and m is an integer of 1-10.

Particular examples of the fluorine-based surfactant include 2-[methyl[(nonafluorobutyl)sulfonyl]amino]ethyl acrylate (FC4430, 3M Co.), or the like.

According to an embodiment of the present disclosure, the surfactant may have an electrolyte permeability of 30% or more, or 40-90%, even after high-temperature storage. Herein, the electrolyte permeability may be determined by analyzing a product, obtained by adding 0.5 parts by weight of the surfactant to 100 parts by weight of an electrolyte containing 1 M LiPF₆ in ethylene carbonate and ethyl methyl carbonate (3:7 volume ratio) to prepare a composition, and sealing the resultant composition and storing it in an oven at 70°C for 6 hours, with a UV-Vis spectrophotometer at room temperature (25°C).

When the surfactant satisfies the above-defined range of electrolyte permeability, it is possible to facilitate controlling side reactions in a battery.

According to an embodiment of the present disclosure, the content of the surfactant is 1.0 parts by weight or less, 0.7 parts by weight or less, or 0.5 parts by weight or less, and 0.05 parts by weight or more, 0.1 parts by weight or more, or 0.5 parts by weight or more, based on 100 parts by weight of the polymer compound. Within the above-defined range, the polymer compound may be used in an adequate amount, and the surfactant can increase the hydrophilicity of the porous polymer substrate so that the effect of the present disclosure may be accomplished. In addition, it is possible to minimize side effects upon the performance of a battery within the above-defined range.

Meanwhile, the separator according to an embodiment of the present disclosure may further include a porous coating layer containing inorganic particles and a binder polymer on at least one surface of the separator.

Herein, there is no particular limitation in the inorganic particles, as long as they are electrochemically stable. In other words, there is no particular limitation in the inorganic particles that may be used herein, as long as they cause no oxidation and/or reduction in the range (e.g. 0-5 V based on Li/Li⁺) of operating voltage of an applicable electrochemical device. Particularly, when using inorganic particles having a high dielectric constant, it is possible to improve the ion conductivity of an electrolyte by increasing the dissociation degree of an electrolyte salt, such as a lithium salt, in a liquid electrolyte.

For the above-mentioned reasons, the inorganic particles may be inorganic particles having a dielectric constant of 5 or more, inorganic particles having lithium-ion transportability, or a mixture of two or more of them.

The inorganic particles having a dielectric constant of 5 or more may include any one selected from the group consisting of Al₂O₃, SiO₂, ZrO₂, AlO(OH), Al(OH)₃, TiO₂, BaTiO₃, Pb(ZrₓTi₁₋ₓ)O₃ (PZT, wherein 0 < x < 1), Pb₁₋ₓLaₓZr_{1-y}Ti_{y}O₃ (PLZT, wherein 0 < x < 1, 0 < y < 1), (1-x)Pb(Mg_{1/3}Nb_{2/3})O₃₋ₓPbTiO₃ (PMN-PT, wherein 0 < x < 1), hafnia (HfO₂), SrTiO₃, SnO₂, CeO₂, MgO, NiO, CaO, ZnO and SiC, or a mixture of two or more of them.

The inorganic particles having lithium-ion transportability may be any one selected from the group consisting of lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂-based glass (LiₓSi_{y}S_{z}, 0 < x < 3, 0 < y < 2, 0 < z < 4) and P₂S₅-based glass (LiₓP_{y}S_{z}, 0 < x < 3, 0 < y < 3, 0 < z < 7), or a mixture of two or more of them.

In addition, there is no particular limitation in the average particle diameter of the inorganic particles. However, the inorganic particles preferably have an average particle diameter of 0.001-10 µm in order to form a coating layer with a uniform thickness and to provide suitable porosity. The average particle diameter of the inorganic particles may be preferably 100 nm to 2 µm, more preferably 150 nm to 1 µm.

According to an embodiment of the present disclosure, the inorganic particles may be hydrophilic. When using hydrophilic inorganic particles, it is possible to further increase electrolyte wettability. For example, the inorganic particles may be Al(OH)₃ or Mg(OH)₂.

According to an embodiment of the present disclosure, the porous coating layer may include a binder polymer having a glass transition temperature (T_{g}) of -200 to 200°C. This is because such a binder polymer can improve the mechanical properties, such as flexibility and elasticity, of the finally formed porous coating layer. Such a binder polymer functions as a binder which connects and stably fixes the inorganic particles with one another, and thus contributes to prevention of degradation of mechanical properties of a separator having a porous coating layer.

In addition, it is not essentially required for the binder polymer to have ion conductivity. However, when using a polymer having ion conductivity, it is possible to further improve the performance of an electrochemical device. Therefore, a binder polymer having a dielectric constant as high as possible may be used. In fact, since the dissociation degree of a salt in an electrolyte depends on the dielectric constant of the solvent for the electrolyte, a binder polymer having a higher dielectric constant can improve the salt dissociation degree in an electrolyte. The binder polymer may have a dielectric constant ranging from 1.0 to 100 (measured at a frequency of 1 kHz), particularly 10 or more.

In addition to the above-mentioned function, the binder polymer may be characterized in that it is gelled upon the impregnation with a liquid electrolyte and thus shows a high degree of swelling. Thus, the binder polymer has a solubility parameter (i.e., Hildebrand solubility parameter) of 15-45 MPa^{1/2} or 15-25 MPa^{1/2} and 30-45 MPa^{1/2}. Therefore, hydrophilic polymers having many polar groups may be used more frequently as compared to hydrophobic polymers, such as polyolefins. When the solubility parameter is less than 15 MPa^{1/2} and more than 45 MPa^{1/2}, it is difficult for the binder polymer to be swelled with a conventional liquid electrolyte for a battery.

In the porous coating layer, the inorganic particles are bound among themselves by the binder polymer, while they are packed and are in contact with one another. Thus, interstitial volumes are formed among the inorganic particles and the interstitial volumes become vacant spaces to form pores.

**In** other words, the binder polymer attaches the inorganic particles to one another so that they may retain their binding states. For example, the binder polymer connects and fixes the inorganic particles with one another. **In** addition, the pores of the porous coating layer are those formed by the interstitial volumes among the inorganic particles which become vacant spaces. The space may be defined by the inorganic particles facing each other substantially in a closely packed or densely packed structure of the inorganic particles.

The binder polymer that may be further incorporated to the porous coating layer is not particularly limited, as long as it is used conventionally in the art. Particular examples of the binder polymer include, but are not limited to: polymethyl methacrylate, polybutyl acrylate, polyacrylonitrile, polyviny1 pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinyl alcohol, cyanoethyl cellulose, cyanoethyl sucrose, pullulan, carboxymethyl cellulose, or the like.

Herein, the binder polymer may be a particle-type binder polymer or a non-particle type binder polymer. When the binder polymer is a particle-type binder polymer, the binder polymer is one not dissolved in a solvent. When the binder polymer is a non-particle type binder polymer, it is one dissolved in a solvent. Herein, the solvent may be an aqueous solvent or an organic solvent.

The separator according to an embodiment of the present disclosure may further include other additives as ingredients of the porous coating layer, besides the above-described inorganic particles and binder polymer.

Meanwhile, according to an embodiment of the present disclosure, the porous coating layer may include a polymer compound represented by the above Chemical Formula 1.

Reference will be made to the above description about the polymer compound.

When the porous coating layer further includes the polymer compound, it is possible to further improve electrolyte wettability.

In still another aspect of the present disclosure, there is provided a method for manufacturing a separator for a lithium secondary battery.

Particularly, the method for manufacturing a separator for a lithium secondary battery includes the steps of: (S1) preparing a substrate-modifying composition including a polymer compound represented by the above Chemical Formula 1 and a surfactant dispersed or dissolved in an aqueous solvent; and (S2) applying the substrate-modifying composition onto at least one surface of a hydrophobic porous polymer substrate having a plurality of pores, followed by drying.

Hereinafter, the method according to the present disclosure will be explained in more detail.

In step S1, prepared is a substrate-modifying composition including a polymer compound represented by the above Chemical Formula 1 and a surfactant dispersed or dissolved in an aqueous solvent.

Herein, the aqueous solvent may be water, and may further include a predetermined amount of alcohol. Herein, the polymer compound and the surfactant may be dispersed in the aqueous solvent. In addition, reference will be made to the above description about the surfactant.

Herein, the polymer compound and the surfactant may be dispersed in the aqueous solvent by using a conventional method known to those skilled in the art. For example, an ultrasonic disperser, a ball mill, a bead mill, a disperser, a mixer, or the like, may be used, and particularly, a ball mill or a bead mill is used preferably. Herein, the dispersion treatment time may vary depending on the volume to be treated, but may be suitably 1-20 hours. The particle size of the pulverized polymer compound and surfactant may be controlled depending on the size of beads used in the ball mill or bead mill, or a ball milling (or bead milling) time.

Next, the substrate-modifying composition is applied onto at least one surface of a hydrophobic porous polymer substrate having a plurality of pores, followed by drying (S2).

According to the present disclosure, the porous polymer substrate is a porous membrane and can provide a channel for transporting lithium ions, while insulating the negative electrode and the positive electrode electrically from each other to prevent a short-circuit. Any material may be used with no particular limitation, as long as it may be used conventionally as a material for a separator of an electrochemical device.

Particularly, the porous polymer substrate may be a porous polymer film substrate or a porous polymer nonwoven fabric substrate.

The porous polymer film substrate may be a porous polymer film including polyolefin, such as polyethylene or polypropylene. Such a polyolefin porous polymer film substrate realizes a shut-down function at a temperature of 80-150°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or a mixture of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or a mixture of two or more of them.

In addition, the porous polymer film substrate and the porous polymer nonwoven fabric substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or a mixture thereof, besides the above-mentioned polyolefins.

Although there is no particular limitation in the thickness of the porous polymer substrate, the porous polymer substrate has a thickness of 1-100 µm, particularly 5-50 µm. As the batteries have been provided with high output/high capacity recently, it is advantageous to use a thin film as a porous polymer substrate. The porous polymer substrate may have a pore dimeter of 10-100 nm, 10-70 nm, 10-50 nm, or 10-35 nm, and a porosity of 5-90%, preferably 20-80%. However, according to the present disclosure, such numerical ranges may be changed with ease according to a particular embodiment, or as necessary.

The pores of the porous polymer substrate may include several types of structures. When any one of the average pore size determined by using a porosimeter and the average pore size observed through field emission-scanning electron microscopy (FE-SEM) satisfies the above-defined range, it falls within the scope of the present disclosure.

Herein, in the case of a generally known monoaxially stretched dry separator, the median pore size in the pore size of the transverse direction (TD), not the pore size of the machine direction (MD), determined through FE-SEM is taken as the standard pore size. In the case of the other porous polymer substrates (e.g. wet polyethylene (PE) separator) having a network structure, the pore size measured by using a porosimeter is taken as the standard pore size.

Although there is no particular limitation in the process for applying the substrate-modifying composition onto the porous polymer substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

Then, the porous polymer substrate coated with the substrate-modifying composition may be dried by using a dryer, such as an oven, so that the fibrils in the porous polymer substrate may be modified from hydrophobic fibrils to hydrophilic fibrils. This is because the surfactant and the polymer compound infiltrate into the porous polymer substrate.

After step (S2), the method may further include a step (S3) of applying a composition for forming a porous coating layer containing a solvent, inorganic particles and a binder polymer to at least one surface of the porous polymer substrate on which the substrate-modifying composition is coated and dried, and carrying out drying to form a porous coating layer.

The solvent used herein may be an aqueous solvent or an organic solvent.

The solvent that may be used herein preferably has a solubility parameter similar to the solubility parameter of the binder polymer to be used and a low boiling point. This is because such a solvent facilitates homogeneous mixing and the subsequent solvent removal. In addition, non-limiting examples of the organic solvent include any one selected from acetone, tetrahydrofuran, methylene chloride, chloroform, dimethyl formamide, N-methyl-2-pyrrolidone, methyl ethyl ketone and cyclohexane, or a mixture of two or more of them.

The inorganic particles may be dispersed by using a conventional method known to those skilled in the art. For example, an ultrasonic disperser, a ball mill, a bead mill, a disperser, a mixer, or the like, may be used, and particularly, a ball mill or a bead mill is used preferably. Herein, the dispersion treatment time may vary depending on the volume to be treated, but may be suitably 1-20 hours. The particle size of the pulverized inorganic particles may be controlled depending on the size of beads used in the ball mill or bead mill, or a ball milling (or bead milling) time.

Although there is no particular limitation in the process for applying the composition for forming a porous coating layer onto the porous polymer substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

Then, the porous polymer substrate coated with the composition for forming a porous coating layer may be dried by using a dryer, such as an oven, to form a porous coating layer on the porous polymer substrate.

In the porous coating layer, the inorganic particles are bound to one another by the binder polymer, while they are packed and are in contact with one another, thereby forming interstitial volumes among the inorganic particles, and the interstitial volumes among the inorganic particles become vacant spaces to form pores.

In other words, the binder polymer attaches the inorganic particles to one another so that they may retain their binding states. For example, the binder polymer connects the inorganic particles with one another and fixes them. In addition, the pores of the porous coating layer are those formed by the interstitial volumes among the inorganic particles which become vacant spaces. The spaces may be defined by the inorganic particles facing each other substantially in a closely packed or densely packed structure of the inorganic particles.

The drying may be carried out in a drying chamber, wherein the condition of the drying chamber is not particularly limited due to the application of a non-solvent.

However, since the separator is dried under a humidified condition according to an embodiment of the present disclosure, the binder polymer may be distributed predominantly on the surface of the porous coating layer. The drying step may be carried out under a relative humidity of 30% or more, 35% or more, or 40% or more, and 80% or less, 75% or less, or 70% or less. For example, the drying step may be carried out under a relative humidity of 40-80%. In addition, the drying step may be carried out at a temperature of 20-70°C for 0.1-2 minutes.

Although the thickness of the porous coating layer is not particularly limited, it may be 1-10 µm, particularly 1.5-8 µm. In addition, the porosity of the porous coating layer is not particularly limited, but it may be 35-65%, preferably.

Meanwhile, the composition for forming a porous coating layer may include a polymer compound containing a repeating unit represented by the above Chemical Formula 1.

Reference will be made to the above description about the polymer compound.

When the porous coating layer further includes the polymer compound, it is possible to further improve electrolyte wettability.

In yet another aspect of the present disclosure, there is provided an electrochemical device including a positive electrode, a negative electrode and a separator interposed between the positive electrode and the negative electrode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

The two electrodes, positive electrode and negative electrode, used in combination with the separator according to the present disclosure are not particularly limited, and may be obtained by allowing electrode active materials to be bound to an electrode current collector through a method generally known in the art. Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a positive electrode current collector include foil made of aluminum, nickel or a combination thereof. Non-limiting examples of a negative electrode current collector include foil made of copper, gold, nickel, copper alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, β-cyclodextrin (TCI Co.) and 2-[methyl[(nonafluorobutyl)sulfonyl]amino] ethyl acrylate (FC4430, 3M Co.) as a surfactant were added to water as a solvent at a weight ratio of 99.5:0.5 to prepare a substrate-modifying composition. Herein, the surfactant had an electrolyte permeability of 48% even after high-temperature storage. Herein, the electrolyte permeability was determined by analyzing a product, obtained by adding 0.5 parts by weight of the surfactant to 100 parts by weight of an electrolyte containing 1 M LiPF₆ in ethylene carbonate and ethyl methyl carbonate (3:7 volume ratio) to prepare a composition, and sealing the resultant composition and storing it in an oven at 70°C for 6 hours, with a UV-Vis spectrophotometer at room temperature (25°C).

Then, a polyethylene porous film (porosity: 45%) having a thickness of 9 µm as a porous polymer substrate was dipped in a dipping vessel containing the substrate-modifying composition, and then dried to remove the solvent, thereby providing a separator. Herein, the combined weight of β-cyclodextrin and the surfactant was 0.5 parts by weight based on 100 parts by weight of the polyethylene porous film. In addition, the weight ratio of the β-cyclodextrin to the surfactant based on the combined weight (i.e. 0.5 parts by weight) of β-cyclodextrin and the surfactant was maintained at the weight ratio (i.e. 99.5:0.5) of β-cyclodextrin to the surfactant contained in the original substrate-modifying composition. The test results of the resultant separator are shown in the following Tables 1 and 2.

### Comparative Example 1

A polyethylene porous film (porosity: 45%) having a thickness of 9 µm was prepared as Comparative Example 1.

The test result of the separator is shown in Tables 1 and 2.

### Comparative Example 2

First, 0.5 g of a surfactant (FC4430, 3M Co.) was added to 99.5 mL of water as a solvent to prepare a substrate-modifying composition.

Then, a polyethylene porous film (porosity: 45%) having a thickness of 9 µm as a porous polymer substrate was dipped in a dipping vessel containing the substrate-modifying composition, and then dried to remove the solvent, thereby providing a separator. Herein, the content of the surfactant was 0.5 parts by weight based on 100 parts by weight of the polyethylene porous film.

The test result of the separator is shown in Table 1.

### Comparative Example 3

First, 0.5 g of β-cyclodextrin was added to 99.5 mL of water as a solvent to prepare a substrate-modifying composition.

Then, a polyethylene porous film (porosity: 45%) having a thickness of 9 µm as a porous polymer substrate was dipped in a dipping vessel containing the substrate-modifying composition, and then dried to remove the solvent, thereby providing a separator. Herein, it is difficult to present the content of β-cyclodextrin based on 100 parts by weight of the polyethylene porous film as a representative value due to a large deviation depending on position. The test result of the separator is shown in Table 1.

**[Table 1]**

| | Composition | Thickness of separator (um) | Tensile strength (kg/cm²) | | Improvement of wettability | |
|---|---|---|---|---|---|---|
| | | | MD | TD | Electrolyte drop test | Water drop contact angle (°) |
| Ex. 1 | Water + β-cyclodextrin + surfactant | 15.7 | 2452 | 2199 | FIG. 1 | 89 |
| Comp. Ex. 1 | - | 15.5 | 2279 | 2067 | FIG. 2 | 114 |
| Comp. Ex. 2 | Water + surfactant | 15.5 | 2310 | 2098 | FIG. 3 | 107 |
| Comp**.** Ex. 3 | Water + β-cyclodextrin | The porous polymer substrate shows hydrophobicity, and no additive capable of improving wettability is used to cause a failure in coating. | | | | |

Herein, the tensile strength of each separator was determined by cutting each separator into a size of 15 mm x 100 mm to prepare a sample, drawing the prepared sample in the machine direction (MD) and transverse direction (TD) at a rate of 500 mm/min according to ASTM-D882, and measuring the strength at a point where the specimen is broken.

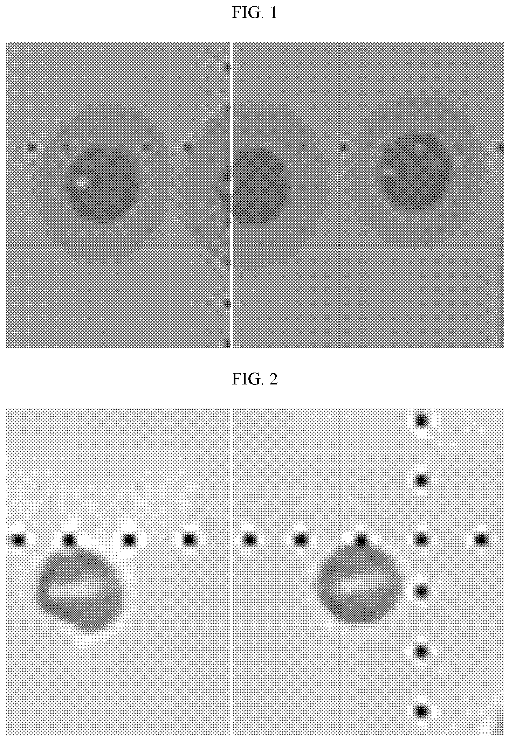

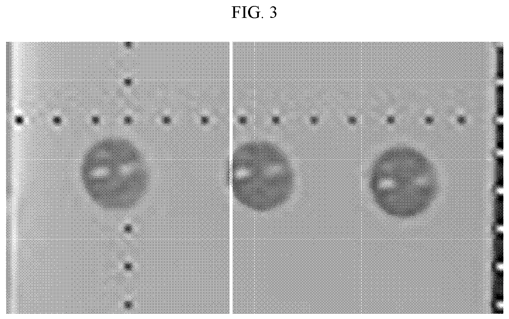

The wettability according to the electrolyte drop test was determined by injecting 2 µL of an electrolyte containing lithium hexafluorophosphate (LiPF₆) dissolved in a solvent including propylene carbonate/dimethyl carbonate/ethyl methyl carbonate (PC/DMC/EMC = 20:40:40 wt%) to the surface of each separator, and observing the behavior of the electrolyte for 5 minutes. The results are shown in FIG. 1 to FIG. 3.

Meanwhile, the water drop contact angle was determined by using a contact angle analyzer (Model name: DSA100, available from KRUSS). Particularly, one drop of a predetermined amount of solution (water) was dropped on the surface of each separator, and then the image was analyzed to measure the angle between the substrate and the water drop and to determine the contact angle.

**[Table 2]**

| | Example 1 | Comparative Example 1 |
|---|---|---|
| Heat shrinkage MD (%) | 8.0 | 8.0 |
| Heat shrinkage TD (%) | 7.5 | 7.5 |
| Right after heat shrinkage test | FIG. 4(a) | FIG. 5(a) |
| After carrying out heat shrinkage test and spreading separator | FIG. 4(b) | FIG. 5(b) |

Herein, the heat shrinkage was calculated according to the formula of (initial length - length after heat shrinking at 120°C for 1 hour)/(initial length) X 100.

When no surface treatment is carried out in the case of Comparative Example 1, the separator shows a contact angle approximately 28% larger than the contact angle of Example 1. In addition, it can be seen from FIG. 2 that the electrolyte wettability is not improved.

When the surfactant is used alone, while not using cyclodextrin, in the case of Comparative Example 2, it can be seen that the electrolyte wettability is not improved, similarly to Comparative Example 1.

On the contrary, as can be seen from Example 1 in Table 1, when using both the surfactant and cyclodextrin, the electrolyte wettability is improved and a small contact angle is observed.

## Claims

1. A separator for a lithium secondary battery, comprising: a porous polymer substrate; and a hydrophilic modification layer disposed inside of the porous polymer substrate, or disposed inside of the porous polymer substrate and on at least one surface of the porous polymer substrate, and comprising a polymer compound represented by the following Chemical Formula 1 and a surfactant,
wherein the surfactant is a fluorine-based surfactant,
wherein the content of the surfactant is 1.0 parts by weight or less based on 100 parts by weight of the polymer compound as determined by the method set out in the description,
wherein the content of the polymer compound is 1 part by weight or less based on 100 parts by weight of the porous polymer substrate: 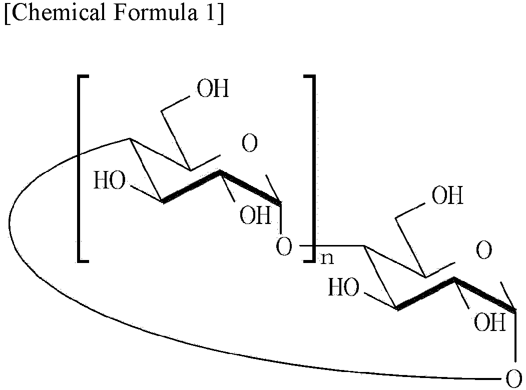
wherein n is an integer of 6-8.

2. The separator for a lithium secondary battery according to claim 1, wherein the polymer compound comprises α-cyclodextrin, β-cyclodextrin, γ-cyclodextrin, or two or more of them.

3. The separator for a lithium secondary battery according to claim 1, wherein the surfactant has an electrolyte permeability of 30% or more even after high-temperature storage, and the electrolyte permeability is determined by analyzing a product, obtained by adding 0.5 parts by weight of the surfactant to 100 parts by weight of an electrolyte containing 1 M LiPF6 in ethylene carbonate and ethyl methyl carbonate (3:7 volume ratio) to prepare a composition, and sealing the resultant composition and storing it in an oven at 70°C for 6 hours, with a UV-Vis spectrophotometer at room temperature (25°C).

4. The separator for a lithium secondary battery according to claim 1, which further comprises a porous coating layer, containing inorganic particles and a binder polymer for fixing and interconnecting the inorganic particles, on at least one surface of the separator .

5. The separator for a lithium secondary battery according to claim 4, wherein the porous coating layer further comprises a polymer compound represented by the following Chemical Formula 1: 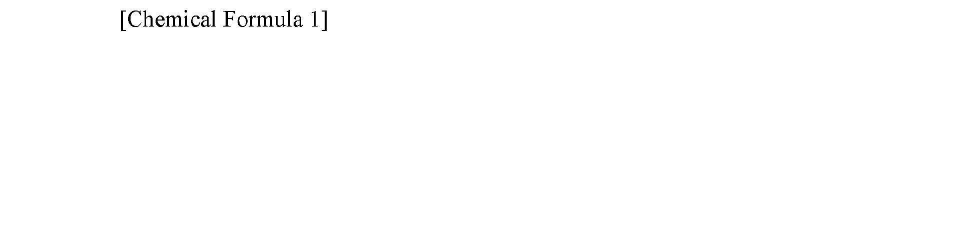 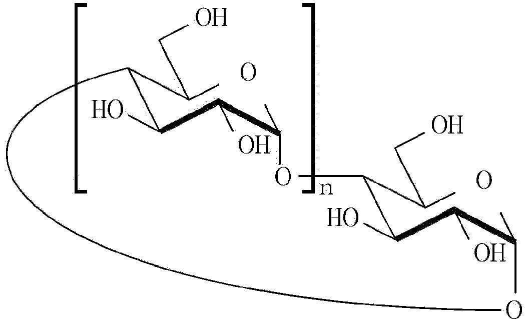 wherein n is an integer of 6-8.

6. The separator for a lithium secondary battery according to claim 5, wherein the content of the polymer compound represented by Chemical Formula 1 is 10 parts by weight or less based on 100 parts by weight of the inorganic particles.

7. The separator for a lithium secondary battery according to claim 4, wherein the inorganic particles are hydrophilic.

8. The separator for a lithium secondary battery according to claim 4, wherein the inorganic particles have a silane group grafted to the surfaces of the inorganic particles.

9. A lithium secondary battery comprising a positive electrode, a negative electrode, a separator interposed between the negative electrode and the positive electrode, and an electrolyte, wherein the separator is the same as defined in any one of claims 1 to 8.

10. A method for manufacturing a separator for a lithium secondary battery, comprising the steps of:
(S1) preparing a substrate-modifying composition comprising a polymer compound represented by the following Chemical Formula 1 and a surfactant dispersed or dissolved in an aqueous solvent; and
(S2) applying the substrate-modifying composition onto at least one surface of a hydrophobic porous polymer substrate having a plurality of pores, followed by drying,
wherein the surfactant is a fluorine-based surfactant,
wherein the content of the surfactant is 1.0 parts by weight or less based on 100 parts by weight of the polymer compound as determined by the method set out in the description,
wherein the content of the polymer compound is 1 part by weight or less based on 100 parts by weight of the porous polymer substrate: 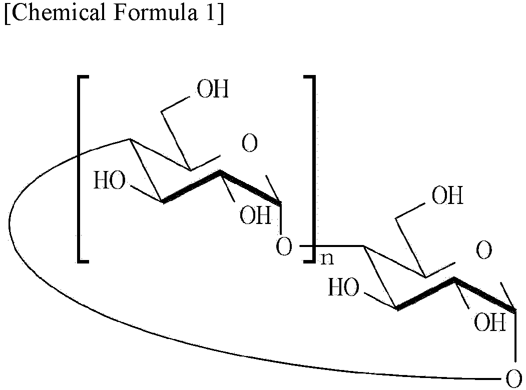
wherein n is an integer of 6-8.

11. The method for manufacturing a separator for a lithium secondary battery according to claim 10, which further comprises step (S3) of applying a composition for forming a porous coating layer, containing a solvent, inorganic particles and a binder polymer, onto at least one surface of the porous polymer substrate coated with the substrate-modifying composition and dried, and then carrying out drying to form a porous coating layer, after step (S2).

## Patentansprüche

1. Separator für eine Lithium-Sekundärbatterie, umfassend:
ein poröses Polymersubstrat; und eine hydrophile Modifizierungsschicht, die innerhalb des porösen Polymersubstrats angeordnet ist oder die innerhalb des porösen Polymersubstrats und auf zumindest einer Oberfläche des porösen Polymersubstrats angeordnet ist, und die eine durch die folgende chemische Formel 1 dargestellte Polymerverbindung und ein Tensid umfasst,
worin das Tensid ein Tensid auf Fluorbasis ist,
worin der Mengenanteil des Tensids 1,0 Gewichtsteile oder weniger beträgt, bezogen auf 100 Gewichtsteile der Polymerverbindung, bestimmt in Übereinstimmung mit dem in der Beschreibung angegebenen Verfahren,
worin der Mengenanteil der Polymerverbindung 1 Gewichtsteil oder weniger beträgt, bezogen auf 100 Gewichtsteile des porösen Polymersubstrats: 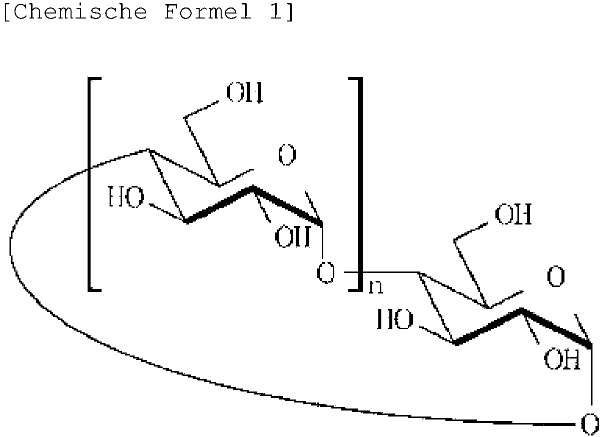
worin n eine ganze Zahl von 6-8 ist.

2. Separator für eine Lithium-Sekundärbatterie gemäß Anspruch 1, worin die Polymerverbindung α-Cyclodextrin, β-Cyclodextrin, γ-Cyclodextrin oder zwei oder mehr hiervon umfasst.

3. Separator für eine Lithium-Sekundärbatterie gemäß Anspruch 1, worin das Tensid eine Elektrolyt-Permeabilität von 30 % oder mehr sogar nach einer Hochtemperaturlagerung aufweist, und worin die Elektrolyt-Permeabilität durch Analysieren eines Produkts mit einem UV-Vis-Spektrophotometer bei Raumtemperatur (25°C) bestimmt wird, das erhalten wird durch Zugeben von 0,5 Gewichtsteilen des Tensids zu 100 Gewichtsteilen eines Elektrolyts, enthaltend 1 M LiPF6 in Ethylencarbonat und Ethylmethylcarbonat (Volumenverhältnis 3:7), um eine Zusammensetzung herzustellen, und Verschließen der resultierenden Zusammensetzung und Lagern hiervon in einem Ofen bei 70°C für 6 Stunden.

4. Separator für eine Lithium-Sekundärbatterie gemäß Anspruch 1, der ferner eine poröse Beschichtungsschicht, enthaltend anorganische Partikel und ein Bindepolymer zum Fixieren und miteinander verbinden der anorganischen Partikel, auf zumindest einer Oberfläche des Separators umfasst.

5. Separator für eine Lithium-Sekundärbatterie gemäß Anspruch 4, worin die poröse Beschichtungsschicht ferner eine durch die folgende chemische Formel 1 dargestellte Polymerverbindung umfasst: 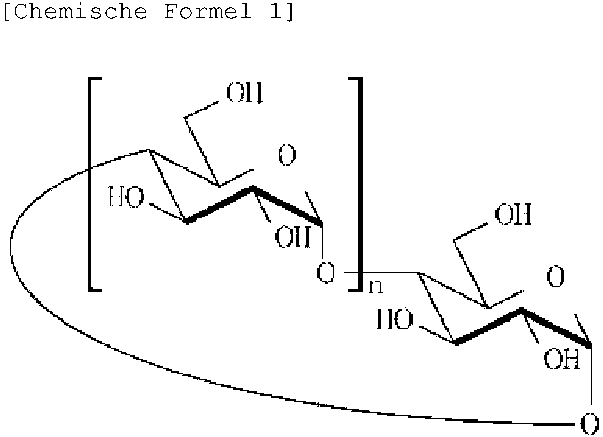 worin n eine ganze Zahl von 6-8 ist.

6. Separator für eine Lithium-Sekundärbatterie gemäß Anspruch 5, worin der Mengenanteil der durch die chemische Formel 1 dargestellten Polymerverbindung 10 Gewichtsteile oder weniger beträgt, bezogen auf 100 Gewichtsteile der anorganischen Partikel.

7. Separator für eine Lithium-Sekundärbatterie gemäß Anspruch 4, worin die anorganischen Partikel hydrophil sind.

8. Separator für eine Lithium-Sekundärbatterie gemäß Anspruch 4, worin die anorganischen Partikel eine Silangruppe aufweisen, die auf die Oberflächen der anorganischen Partikel gepfropft ist.

9. Lithium-Sekundärbatterie, umfassend eine positive Elektrode, eine negative Elektrode, einen zwischen der negativen Elektrode und der positiven Elektrode vorgesehenen Separator und einen Elektrolyten, worin der Separator der gleiche ist, wie er in irgendeinem der Ansprüche 1 bis 8 definiert ist.

10. Verfahren zur Herstellung eines Separators für eine Lithium-Sekundärbatterie, umfassend die Schritte:
(S1) Vorbereiten einer Substrat-modifizierenden Zusammensetzung, umfassend eine durch die folgende chemische Formel 1 dargestellte Polymerverbindung und ein Tensid, dispergiert oder gelöst in einem wässrigen Lösungsmittel; und
(S2) Auftragen der Substrat-modifizierenden Zusammensetzung auf zumindest eine Oberfläche eines hydrophoben porösen Polymersubstrats, das eine Vielzahl von Poren aufweist, gefolgt von Trocknen,
worin das Tensid ein Tensid auf Fluorbasis ist,
worin der Mengenanteil des Tensids 1,0 Gewichtsteile oder weniger beträgt, bezogen auf 100 Gewichtsteile der Polymerverbindung, wie mit dem in der Beschreibung angegebenen Verfahren bestimmt,
worin der Mengenanteil der Polymerverbindung 1 Gewichtsteil oder weniger beträgt, bezogen auf 100 Gewichtsteile des porösen Polymersubstrats: 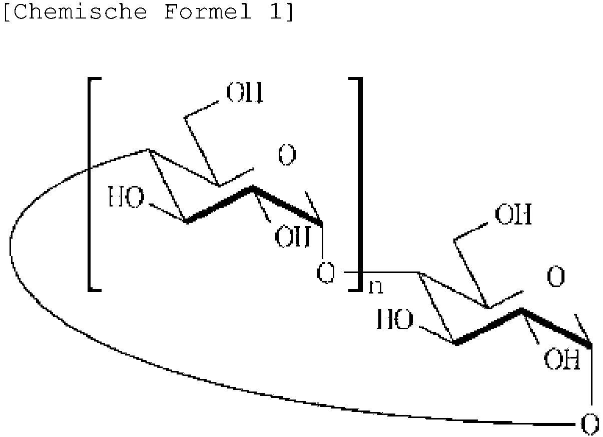
worin n eine ganze Zahl von 6-8 ist.

11. Verfahren zur Herstellung eines Separators für eine Lithium-Sekundärbatterie gemäß Anspruch 10, welches ferner nach dem Schritt (S2) einen Schritt (S3) zum Auftragen einer Zusammensetzung zum Bilden einer porösen Beschichtungsschicht, enthaltend ein Lösungsmittel, anorganische Partikel und ein Bindepolymer, auf zumindest eine Oberfläche des porösen Polymersubstrats, das mit der Substrat-modifizierenden Zusammensetzung beschichtet und getrocknet ist, und dann Durchführen von Trocknen umfasst, um eine poröse Beschichtungsschicht zu bilden.

## Revendications

1. Séparateur pour une batterie secondaire au lithium, comprenant : un substrat polymère poreux ; et une couche de modification hydrophile disposée à l'intérieur du substrat polymère poreux, ou disposée à l'intérieur du substrat polymère poreux et sur au moins une surface du substrat polymère poreux, et comprenant un composé polymère représenté par la Formule Chimique 1 suivante et un tensioactif,
dans lequel le tensioactif est un tensioactif à base de fluor,
dans lequel la teneur en tensioactif, telle que déterminée par le procédé présenté dans la description, est de 1,0 part en poids ou moins sur la base de 100 parts en poids du composé polymère,
dans lequel la teneur en composé polymère est de 1 part en poids ou moins sur la base de 100 parts en poids du substrat polymère poreux : 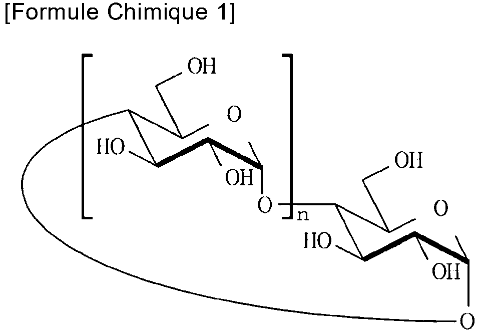
dans laquelle n est un nombre entier de 6 à 8.

2. Séparateur pour une batterie secondaire au lithium selon la revendication 1, dans lequel le composé polymère comprend de la α-cyclodextrine, de la β-cyclodextrine, de la γ-cyclodextrine, ou deux ou plus de celles-ci.

3. Séparateur pour une batterie secondaire au lithium selon la revendication 1, dans lequel le tensioactif présente une perméabilité à l'électrolyte de 30 % ou plus même après un stockage à haute température, et la perméabilité à l'électrolyte est déterminée en analysant un produit, obtenu en ajoutant 0,5 part en poids du tensioactif à 100 parts en poids d'un électrolyte contenant 1 M de LiPF6 dans du carbonate d'éthylène et du carbonate d'éthylméthyle (rapport volumique 3:7) pour préparer une composition, puis en scellant la composition obtenue et en la stockant dans une étuve à 70 °C pendant 6 heures, à l'aide d'un spectrophotomètre UV-Vis à température ambiante (25 °C).

4. Séparateur pour une batterie secondaire au lithium selon la revendication 1, qui comprend en outre, sur au moins une surface du séparateur, une couche poreuse de revêtement contenant des particules inorganiques et un polymère liant pour fixer et relier entre elles les particules inorganiques.

5. Séparateur pour une batterie secondaire au lithium selon la revendication 4, dans lequel la couche poreuse de revêtement comprend en outre un composé polymère représenté par la Formule Chimique 1 suivante : 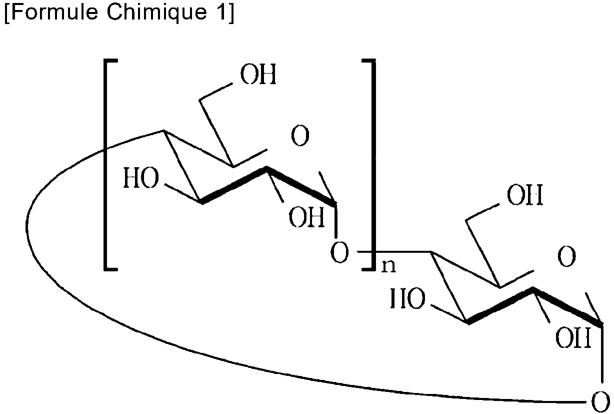 dans laquelle n est un nombre entier de 6 à 8.

6. Séparateur pour une batterie secondaire au lithium selon la revendication 5, dans lequel la teneur en composé polymère représenté par la Formule Chimique 1 est de 10 parts en poids ou moins sur la base de 100 parts en poids des particules inorganiques.

7. Séparateur pour une batterie secondaire au lithium selon la revendication 4, dans lequel les particules inorganiques sont hydrophiles.

8. Séparateur pour une batterie secondaire au lithium selon la revendication 4, dans lequel les particules inorganiques présentent un groupe silane greffé aux surfaces des particules inorganiques.

9. Batterie secondaire au lithium comprenant une électrode positive, une électrode négative, un séparateur interposé entre l'électrode négative et l'électrode positive, et un électrolyte, dans laquelle le séparateur est le même que celui défini dans l'une quelconque des revendications 1 à 8.

10. Procédé de fabrication d'un séparateur pour une batterie secondaire au lithium, comprenant les étapes consistant à :
(S1) préparer une composition de modification de substrat comprenant un composé polymère représenté par la Formule Chimique 1 suivante et un tensioactif dispersé ou dissous dans un solvant aqueux ; et
(S2) appliquer la composition de modification de substrat sur au moins une surface d'un substrat polymère poreux hydrophobe présentant une pluralité de pores, suivi d'un séchage,
dans lequel le tensioactif est un tensioactif à base de fluor,
dans lequel la teneur en tensioactif, telle que déterminée par le procédé présenté dans la description, est de 1,0 part en poids ou moins sur la base de 100 parts en poids du composé polymère,
dans lequel la teneur en composé polymère est de 1 part en poids ou moins sur la base de 100 parts en poids du substrat polymère poreux : 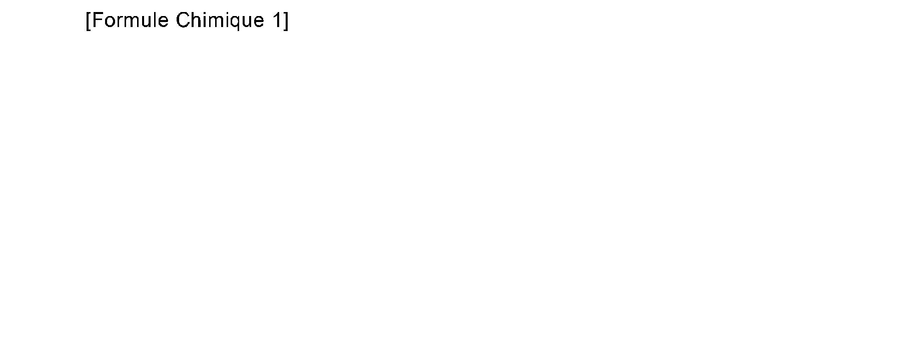 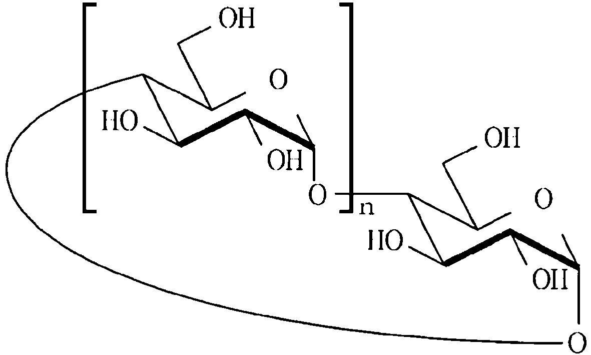
dans laquelle n est un nombre entier de 6 à 8.

11. Procédé de fabrication d'un séparateur pour une batterie secondaire au lithium selon la revendication 10, qui comprend en outre une étape (S3) consistant à appliquer, après l'étape (S2), une composition destinée à former une couche poreuse de revêtement, contenant un solvant, des particules inorganiques et un polymère liant, sur au moins une surface du substrat polymère poreux revêtu de la composition de modification de substrat et séché, puis à mettre en œuvre un séchage de manière à former une couche poreuse de revêtement.
